# EUROPEAN PATENT SPECIFICATION

(11) **EP 2 978 254 B1**
(45) Date of publication and mention of the grant of the patent: **25.03.2020**
(21) Application number: 13801363.6
(22) Date of filing: 19.07.2013
(51) Int. Cl.: H04W 24/04, H04W 76/00, H04W 64/00, H04W 16/00, H04W 76/18

(54) **METHOD AND DEVICE FOR PROCESSING RADIO LINK FAILURE**
VERFAHREN UND VORRICHTUNG ZUR VERARBEITUNG VON FUNKVERBINDUNGSFEHLERN
PROCÉDÉ ET DISPOSITIF DE TRAITEMENT D'UNE PANNE DE LIAISON RADIO

(30) Priority: 22.03.2013 CN 201310094983
(43) Date of publication of application: 27.01.2016
(73) Proprietor: ZTE Corporation, Shenzhen, Guangdong 518057 (CN)
(72) Inventor: SU, Lan, Shenzhen Guangdong 518057 (CN)
(74) Representative: Ligi, Stefano
(86) International application number: PCT/CN2013/079658
(87) International publication number: WO 2013/182146

(56) References cited:
- WO-A1-2011/127018
- WO-A2-01/63794
- CN-A- 1 398 066
- CN-A- 1 773 902
- CN-A- 101 141 183
- CN-A- 101 277 509
- CN-A- 102 036 284
- CN-A- 102 083 115
- 3GPP: "Technical Specification3rd Generation Partnership Project;Technical Specification Group Radio Access Network;Physical layer procedures (FDD)(Release 11)", TS 25.214 V11.5.0, 12 March 2013 (2013-03-12), - 12 March 2013 (2013-03-12), pages 1-127, XP002754584,

## Description

### Technical Field

The present invention relates to the communication field, and specifically, to a method and an apparatus for processing radio link failure.

### Background of the Related Art

After the High-Speed Packet Access plus (HSPA+) is introduced, under the cell forward access channel (CELL-FACH) state and the IDLE mode, there will be a radio link failure scenario, and after radio resource control (RRC) has received an indication of out of synchronization sent by the physical layer (LI), it is considered that the radio link failure occurs. According to the description in the current protocol, after the radio link failure occurs under the CELL-FACH, the enhanced dedicated channel (E-DCH) resources are immediately released, and the current protocol does not describe the subsequent processing, which may cause the radio link not to be recovered. Meanwhile, after the radio link failure occurs under the IDLE mode, the protocol does not give any processing.

Moreover, in the media access control (MAC) layer, if the radio link failure is detected during the enhanced transmission of the CELL-FACH state and IDLE mode, a timer T2 of 10 ms and a back-off timer T_bo1 of which the time length is integral multiple of 10ms are successively started. According to the current RRC processing, thus a scenario which probably occurs is that: when T2 is just started, the common E-DCH resources will be released, T2 is stopped, and there is no chance to start T_bol, so these two timers lose the meaning of existence. Document "Technical Specification3rd Generation Partnership Project;Technical Specification Group Radio Access Network;Physical layer procedures (FDD)(Release 11)",TS 25.214 V11.5.0, 12 March 2013, discloses an uplink radio link failure/restore in CELL_DCH state. Node B shall start timer T RLFAILURE after receiving N_OUTSYNC_IND consecutive out-of-sync indications. Node B shall stop and reset timer T RLFAILURE upon receiving successive N_INSYNC_IND in sync indications. If T_RLFAILURE expires, Node B shall trigger the RL Failure procedure and indicate which radio link set is out-of-sync. When the RL Failure procedure is triggered, the state of the radio link set change to the out-of-sync state.

### Summary of the Invention

The scope of the invention is defined by the appended independent claims.

The embodiment of the present invention provides a method and and an apparatus for processing radio link failure, and after the radio link failure occurs, it can cause the radio link to be recovered.

In conclusion, after the radio link failure occurs in the CELL_FACH state and IDLE mode, the method and apparatus for processing the radio link failure provided by the embodiment of the present invention can cause the radio link to be recovered and cause the protocol timer in the MAC layer to have the meaning of existence under this scenario.

### Brief Description of Drawings

FIG. 1 is a flow chart of a method for processing a radio link failure in accordance with the embodiment of the present invention;
FIG. 2 is a flow chart of a method for processing a radio link failure in accordance with one specific application example of the present application;
FIG. 3 is a schematic diagram of an apparatus for processing a radio link failure in accordance with the embodiment of the present invention;

### Preferred Embodiments of the Present Invention

The examples of the present invention will be described in detail in combination with the accompanying drawings below. It should be noted that, in the case of no conflict, the embodiments and features in the embodiments of the present application may be arbitrarily combined with each other.

To better understand the present application, the present application will be further described below in conjunction with accompanying drawings and specific embodiments.

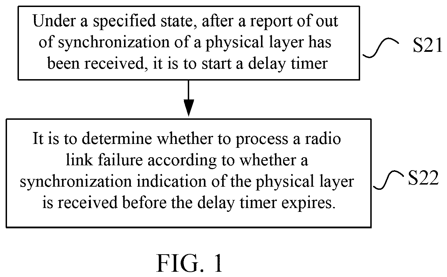

FIG. 1 is a flow chart of a method for processing a radio link failure in accordance with an embodiment of the present invention, and as shown in FIG. 1, the method of the embodiment comprises that:
In step S11, under a specified state, a terminal device starts a delay timer after receiving a report of out of synchronization of the physical layer;
In step S12, the terminal device determines whether to process a radio link failure according to whether a synchronization indication of the physical layer is received before the delay timer expires.

The embodiment mainly aim to uniformly process the radio link failures which occur under the CELL_FACH state and IDLE mode. In the embodiment, a radio link failure delay processing delay timer (T_rlfdelay) is started, and a time length of the timer should be greater than or equal to a maximum configured back-off time length (N_bolmax ^{∗} 10ms).

The method of the embodiment can solve the problems that, after the radio link failure occurs under the CELL_FACH state and IDLE mode, the radio link may be caused not to be recovered and the protocol timer in the MAC layer is disabled, which can effectively improve the stability of the services under the CELL_FACH state.

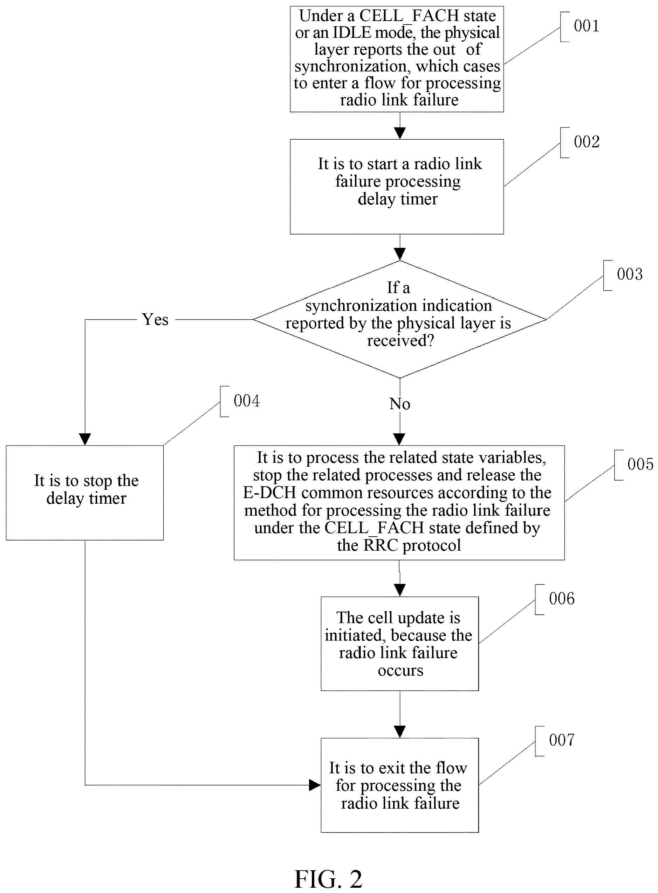

FIG. 2 is a flow chart of a method for processing a radio link failure in accordance with one specific application example of the present application, and as shown in Fig.2, which comprises the following steps.

In step 001, under a CELL_FACH state or an IDLE mode, the physical layer reports the out of synchronization, which causes to enter a flow for processing the radio link failure, and it proceeds to step 002.

In step 002, the terminal device starts a radio link failure processing delay timer (T_rlfdelay), and it proceeds to step 003.

In step 003, if a synchronization indication reported by the physical layer has not been received before the delay timer expires, it proceeds to step 005, and if a synchronization indication reported by the physical layer has been received before the delay timer expires, it proceeds to step 004.

In step 004, the terminal device stops the timer T_rlfdelay, and it proceeds to step 007.

In step 005, the terminal device processes the related state variables, stops the related processes and releases the E-DCH common resources according to the method for processing the radio link failure under the CELL_FACH state defined by the RRC protocol, and it proceeds to step 006.

In step 006, the cell update is initiated, because the radio link failure occurs, and it proceeds to step 007.

In step 007, it is to exit the flow for processing the radio link failure.

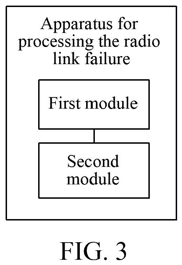

FIG. 3 is a schematic diagram of an apparatus for processing a radio link failure in accordance with the embodiment of the present invention, and as shown in FIG.3, the apparatus of the embodiment comprises: a first module, a second module and a delay timer, wherein,
the first module is configured to, under a specified state, after a report of out of synchronization of a physical layer has been received, start the delay timer;
the second module is configured to determine whether to process a radio link failure according to whether synchronization indication of the physical layer is received before the delay timer expires.

Wherein, the second module determines whether to process the radio link failure according to whether the synchronization indication of the physical layer is received before the delay timer expires, which refers that, if the synchronization indication of the physical layer has been received before the delay timer expires, the radio link failure is not processed; if the synchronization indication of the physical is not received before the delay timer expires, the radio link failure is processed according to rules in a radio resource control protocol.

Wherein, the specified state comprises: a CELL_FACH state and an IDLE mode.

A time length of the delay timer is greater than or equal to a maximum back-off time length.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above examples also can be implemented by using one or multiple integrated circuits. Correspondingly, each module/unit in the above examples can be implemented in a form of hardware, and also can be implemented in a form of software function module. The embodiments of the present invention are not limited to any particular form of a combination of hardware and software.

The above embodiments are merely used to describe the technical solutions of the present application without limitation, and the present application is merely described in detail with reference to preferable embodiments.

### Industrial Applicability

The method and apparatus for processing the radio link failure provided by the embodiment of the present invention, after the radio link failure occurs under the CELL_FACH state and IDLE mode, it can cause the radio link to be recovered and cause the protocol timer in the MAC layer to have the meaning of existence under this scenario.

## Claims

1. A method for processing a radio link failure, comprising:
under a specified state, after receiving a report of out of synchronization of a physical layer, a terminal device starting a delay timer, wherein, the specified state comprises a CELL_FACH state or an idle mode;
the terminal device determining whether to process the radio link failure according to whether a synchronization indication of the physical layer is received before the delay timer expires.

2. The method according to claim 1, wherein, the step of determining whether to process the radio link failure according to whether a synchronization indication of the physical layer is received before the delay timer expires, comprises:
if the synchronization indication of the physical layer has been received before the delay timer expires, not processing the radio link failure;
if the synchronization indication of the physical layer is not received before the delay timer expires, processing the radio link failure according to rules in a radio resource control protocol.

3. The method according to claim 1, wherein,
the specified state comprises: a CELL_FACH state and an idle mode.

4. The method according to any one of claims 1-3, wherein:
a time length of the delay timer is greater than or equal to a maximum back-off time length.

5. An terminal device for processing a radio link failure, comprising: a first module, a second module and a delay timer, wherein,
the first module is configured to, under a specified state, after receiving a report of out of synchronization of a physical layer, start the delay timer, wherein, the specified state comprises a CELL_FACH state or an idle mode;
the second module is configured to determine whether to process the radio link failure according to whether a synchronization indication of the physical layer is received before the delay timer expires.

6. The terminal device according to claim 5, wherein:
the second module determines whether to process the radio link failure according to whether a synchronization indication of the physical layer is received before the delay timer expires, which refers that, if the synchronization indication of the physical layer is received before the delay timer expires, the radio link failure is not processed; if the synchronization indication of the physical layer is not received before the delay timer expires, the radio link failure is processed according to rules in a radio resource control protocol.

7. The terminal device according to claim 5, wherein:
the specified state comprises: a CELL_FACH state and an idle mode.

8. The terminal device according to any one of claims 5-7, wherein,
a time length of the delay timer is greater than or equal to a maximum back-off time length.

## Patentansprüche

1. Verfahren zur Verarbeitung eines Funkverbindungsfehlers, umfassend:
unter einem festgelegten Zustand, nach Erhaltung eines Berichts über "außer Synchronisation" einer physikalischen Schicht, startet ein Endgerät einen Verzögerungszeitgeber, worin der festgelegte Zustand einen CELL_FACH-Zustand oder einen Ruhemodus umfasst;
das Endgerät bestimmt, ob der Funkverbindungsfehler je nachdem verarbeitet werden soll, ob eine Synchronisationsanzeige der physikalischen Schicht empfangen wird, bevor der Verzögerungszeitgeber abläuft.

2. Verfahren nach Anspruch 1, worin der Schritt des Bestimmens, ob der Funkverbindungsfehler je nachdem verarbeitet werden soll, ob eine Synchronisationsanzeige der physikalischen Schicht empfangen wird, bevor der Verzögerungszeitgeber abläuft, umfasst:
wenn die Synchronisationsanzeige der physikalischen Schicht empfangen worden ist, bevor der Verzögerungszeitgeber abläuft, kein Verarbeiten des Funkverbindungsfehlers;
wenn die Synchronisationsanzeige der physikalischen Schicht nicht empfangen wird, bevor der Verzögerungszeitgeber abläuft, Verarbeiten des Funkverbindungsfehlers gemäß Regeln in einem Funkressourcensteuerungsprotokoll.

3. Verfahren nach Anspruch 1, worin
der festgelegte Zustand einen CELL_FACH-Zustand und einen Ruhemodus umfasst.

4. Verfahren nach einem der Ansprüche 1 bis 3, worin:
eine Zeitdauer des Verzögerungszeitgebers größer oder gleich einer höchsten Back-Off-Zeitdauer ist.

5. Endgerät zur Verarbeitung eines Funkverbindungsfehlers, umfassend: ein erstes Modul, ein zweites Modul und einen Verzögerungszeitgeber, worin
das erste Modul dazu eingerichtet ist, um, unter einem festgelegten Zustand, nach Erhaltung eines Berichts über "außer Synchronisation" einer physikalischen Schicht, den Verzögerungszeitgeber zu starten, worin der festgelegte Zustand einen CELL_FACH-Zustand oder einen Ruhemodus umfasst;
das zweite Modul dazu eingerichtet ist, um zu bestimmen, ob der Funkverbindungsfehler je nachdem verarbeitet werden soll, ob eine Synchronisationsanzeige der physikalischen Schicht empfangen wird, bevor der Verzögerungszeitgeber abläuft.

6. Endgerät nach Anspruch 5, worin:
das zweite Modul bestimmt, ob der Funkverbindungsfehler je nachdem verarbeitet werden soll, ob eine Synchronisationsanzeige der physikalischen Schicht empfangen wird, bevor der Verzögerungszeitgeber abläuft, was bedeutet, dass, wenn die Synchronisationsanzeige der physikalischen Schicht empfangen wird, bevor der Verzögerungszeitgeber abläuft, der Funkverbindungsfehler nicht verarbeitet wird; wenn die Synchronisationsanzeige der physikalischen Schicht nicht empfangen wird, bevor der Verzögerungszeitgeber abläuft, wird der Funkverbindungsfehler gemäß Regeln in einem Funkressourcensteuerungsprotokoll verarbeitet.

7. Endgerät nach Anspruch 5, worin:
der festgelegte Zustand einen CELL_FACH-Zustand und einen Ruhemodus umfasst.

8. Endgerät nach einem der Ansprüche 5 bis 7, worin
eine Zeitdauer des Verzögerungszeitgebers größer oder gleich einer höchsten Back-Off-Zeitdauer ist.

## Revendications

1. Méthode de traitement d'une panne de liaison radio, comprenant :
dans un état spécifié, après la réception d'un rapport de désynchronisation d'une couche physique, un dispositif terminal déclenchant un temporisateur, où l'état spécifié comprend un état CELL_FACH ou un mode inactif ;
le dispositif terminal déterminant s'il faut traiter la panne de liaison radio en fonction de la réception ou non d'une indication de synchronisation de la couche physique avant l'expiration du temporisateur.

2. Méthode selon la revendication 1, où, l'étape de déterminer s'il faut traiter la panne de liaison radio en fonction de la réception ou non d'une indication de synchronisation de la couche physique avant l'expiration du temporisateur, comprend :
si l'indication de synchronisation de la couche physique a été reçue avant l'expiration du temporisateur, l'absence de traitement de la panne de liaison radio ;
si l'indication de synchronisation de la couche physique n'est pas reçue avant l'expiration du temporisateur, le traitement de la panne de liaison radio selon les règles d'un protocole de contrôle des ressources radio.

3. Méthode selon la revendication 1, où,
l'état spécifié comprend : un état CELL_FACH et un mode inactif.

4. Méthode selon l'une quelconque des revendications de 1 à 3, où :
une durée temporale du temporisateur est supérieure ou égale à une durée maximale de la durée temporale de reprise.

5. Dispositif terminal pour le traitement d'une panne de liaison radio, comprenant : un premier module, un deuxième module et un temporisateur, où,
le premier module est configuré pour, dans un état spécifié, après la réception d'un rapport de désynchronisation d'une couche physique, déclencher le temporisateur, où l'état spécifié comprend un état CELL FACH ou un mode inactif ;
le deuxième module est configuré pour déterminer s'il faut traiter la panne de liaison radio en fonction de la réception ou non d'une indication de synchronisation de la couche physique avant l'expiration du temporisateur.

6. Dispositif terminal selon la revendication 5, où :
le deuxième module détermine s'il faut traiter la panne de liaison radio en fonction de la réception ou non d'une indication de synchronisation de la couche physique avant l'expiration du temporisateur, ce qui indique que,
si l'indication de synchronisation de la couche physique est reçue avant l'expiration du temporisateur, la panne de liaison radio n'est pas traité ; si l'indication de synchronisation de la couche physique n'est pas reçue avant l'expiration du temporisateur, la panne de liaison radio est traitée selon les règles d'un protocole de contrôle des ressources radio.

7. Dispositif terminal selon la revendication 5, où :
l'état spécifié comprend : un état CELL_FACH et un mode inactif.

8. Dispositif terminal selon l'une quelconque des revendications de 5 à 7, où, une durée temporale du temporisateur est supérieure ou égale à une durée maximale de la durée temporale de reprise.
